# EUROPEAN PATENT APPLICATION

(11) **EP 0 709 949 A2**
(43) Date of publication of application: **01.05.1996**
(21) Application number: 95500128.4
(22) Date of filing: 21.09.1995
(51) Int. Cl.: H02M 3/335

(54) **DC/DC converter for power feeding**

(30) Priority: 24.10.1994 ES 9402206
(71) Applicant: TELEFONICA DE ESPANA, S.A., E-28013 Madrid (ES)
(72) Inventor: Pozas Alvarez, José Antonio, E-28043 Madrid (ES); Bernales Pacheco, Victor, E-28043 Madrid (ES)
(74) Representative: Sanchez del Campo Gonzalez de Ubierna, Ramon

(57) **Abstract**

Feed converter circuit consisting of a circuit supplying the necessary voltage for different boards of modernization systems of electromechanical telephone stations, configured as a DC/DC converter throught pulse width modulation in common mode, and based on the FLYBACK topography, providing three different feeding voltages, regulated and protected against short -circuit and overcharge, being also insulated each other with regard to the input voltage, two of them being of equal and opposite sign.

## Description

The present specification refers to a patent of invention relating to a feed converter circuit, the purpose of which is to be configured as a circuit supplying the necessary voltage to different boards of modernization systems of electromechanical telephone stations.

### FIELD OF THE INVENTION

This invention applies to the telecommunications field, and in a most definite way, to electromechanical telephone stations used for public telephony.

### RELATED ART

In the scheme of modernization of electromechanical stations, the incorporation of electronic register in said stations must be considered.

As a result of the board structure of the electronic registers, the needs for a feed can be classified as follows, namely:
- Control logic feed.
- Hard disk feed.
- Interface logic feed.

Furthermore, in said scheme of modernization of electromechanical telephone stations, the system structure implies that each module must rely on a distributed feed system, so that each board will provide the feed functions from its circuitry.

The input feed being -48V, it is necessary to have a DC/DC converter for enabling the different feed outputs required, starting from this input voltage.

There is a great variety of voltage converters in the market, and many of these voltage converters rely on several outputs, but all these outputs deliver the maximum power through one of the - possible outputs, there being only one regulation on one of these outputs.

Also, the converter must be able to work as a master, or like an externally synchronized auxiliary, and, by reason of space, it must be of a very small size, and have a great efficiency in order to avoid overheating.

The required voltage and current characteristics in each of - these cases cause the non existence in the market of convertors covering per se these requirements.

The evident solution to the present problems in this matter would be to rely on a feed converter circuit which could solvein a satisfactory manner these problems, supplying a feed for different necessary characteristics and current, and causing said feed to be distributed in the manner as described on each board.

Nevertheless, until now nothing is known about the existence of a feed converter circuit fitted with the characteristics pointed out as suitable.

### SUMMARY OF THE INVENTION

The feed converter circuit as proposed by the invention constitutes per se a clear solution to the above-mentioned problems, since starting from it, it is possible to attain a supply of feed for the different necessary voltage and current requirements, and also to cause said feed to be distributed in an equal way to each of boards.

In a more definite way, the feed converter circuit of the invention consists of a pulse width modulation (PWN) DC/DC converter, in a common mode, and based on the "FLYBACK" topology.

This circuit provides three different feed voltages, each voltage being regulated and protected from short-circuit and overcharge, and also being insulated each other and with regard to the input voltage, two of them being equal and opposite in sign.

Two out of these three voltages will be called V5P and V5N, the third one being denominated V12P, and such as above indicated, V5P=-V5N.

The circuit is mainly composed of the following blocks, namely:-
- Main converter.
- Output postregulator V12P.
- Output postregulator V5N.
- Protection, synchronism and reset circuits.

The switching frequency of output postregulator V12P is synchronized with the main converter.

The main converter performs a regulation process on the output V5P, so being obtained the other two outputs (V12P and V5N) of both postregulators, and, in this way, regulation characteristics are obtained, which together with the circuit structure allow the circuit to deliver its maximum power either thru the ouput V5P or thru the outpu V12P.

In addition to the above-mentioned, the converter has an external control pin, which allows it to be configured as a master or a slave.

In the first case, that is to say, if configured as a master, te external control terminal must be short-circuited with the -48V input, and the converter will begin to deliver power as soon as it input has voltage within the foreseen limit.

In the case the converter operates as a slave, the external control terminal is left disconnected.

The converter supervises the input voltage, and there is a hysteresis cycle which prevents any oscillation when being putting into service or when disconnecting the converter.

Furthermore, the converter protects an excess consumption at the output due exclusively to input current limitations.

As a result of the converter dimensions and, therefore, the heat evacuation at the ceramics, the converter has been provided with a thermic protection circuit.

In view of the input current protection and the above-mentioned thermic protections, the converter will not undergo any change in its functional character upon subjecting its outputs to any resistive load condition.

By analysing each of the main components of the feed converter of the invention, it is clear that:-

The main converter is basically composed of the following blocks, namely:-
- A control block. Controller in common mode for switched sources, characterized by its low consumption, high switching frequency, high speed current limitation comparator, high efficiency of the output driver step, and a small number of external components for performing its control functions.

A resistance senses the current circulating via the primary winding, this signal being applied to the current limitation comparator, and the noise which could exist in the current signal being then filtered.
- Switch. It is a channel "N", low series resistance Mosfet. It is energized by means of a driver, so optimizing the power-on and power-off times thereof.
- Transformer. It uses a sole storage device of magnetic energy, not being necessary to use any inductor storing the energy to be delivered to the load during the disconnecting time of the switch.

The transformer block has a series of rectifiers and condensers, so that during the conduction time of the switch, the transformer stores energy in the primary winding, the rectifiers are inverted and the condensers supply the energy delivered to the three outputs.

During the disconnecting time of the switch, the rectifiers are conductive, and the energy stored in the primary winding is transferred to the secondary winding to charge the condensers and feed the charges connected to the outputs.
- Rectifiers and auxiliary output filters. For the not regulated V5NR output,there are also a rectifier and a filter composed of two parallel condensers. This voltage is applied to the postregulator of the V5N output.
- Rectifiers and output filter. For the regulated V5P output, there is two rectifiers connected in parallel to handle the value of the forward repetitive peak current circulating through them when a short-circuit is caused in this output. The output filter is composed by three parallel condensers.
- Feedback circuit. It is performed from output terminals by means of a resistive divider. The feedback voltage is applied to the reversing input of a comparator having an integrating network, smoothing the crimping there present, connected between its output and input.

The amplifier output is applied to an optocoupler, so obtaining an electric insulation between the primary and secondary winding of the transformer.

As regard to postregulator of V12P output, it is to be pointed out that it is based on the "BUCK" topology, that is to say, its output voltage is lesser than the input voltage, and has one of the floating input terminals.

The blocks composing it are as follows, namely:-
- Control block. A controller in common mode for switched sources, characterized because of its low consumption, high switching frequency, high speed current limitation comparator, high efficiency of the output driver step, and a small number of external compoponents for performing its control functions.

As already mentioned, the switching frequency is synchronized with the main converter.

A resistance senses the current circulating via a coil during the semicycle in which energy is stored, this signal being applied to the current limitation circuit for short-circuits.

This control block has a soft-start circuit, acting directly on the output of an error amplifier, setting it in a potential close to mass during the circuit power-on.

An unstable operation is produced in the feeding sources in common mode based on the "BUCK" topology,when the converter is designed to operate with work cycles higher than 50%, at a steady switching frequency, and the energy storing element operates in a continuous conducting mode

This phenomenon is not destructive, but it causes inestability in the converter frequency, impairing its dynamic characteristics.

For this reason, and since the converter is used with a work cycle higher than 80%, this block has also a ramp generator which is directly proportional to the current circulating over the switch during the conduction time, which corrects said inestability in the switching upon making the circuit to believe that the magnetic flow of the coil becomes zero during the time it is not conductive.

It should be pointed out that the switch is a "N" channel, low series resistance Mosfet, and it is energized by means of a driver, so optimizing the power-on and power-off times thereof.

The coil is used as a sole device for storing magnetic energy, and the feeback circuit is performed from the V12P output terminals and related connection to mass by means of a resistive divider.

The postregulator of V5N output consists of a linear regulator, the integrated circuit of which is fitted with an internal protection against short-circuit at its output terminals, and there is a filter at its output.

The protection, synchronism and reset circuits allow the converter operation to be controlled according to the application carried out, and these circuits Protect it, furthermore, against variations in the feed source in case that the loads connected to its outputs will consume more energy than the maximum nominal value stipulated.

These circuits are as follows, namely:-
- External synchronism. Although the modulator circuit of the main converter is fitted with an internal oscillator, this external synchronism circuit allows it to work synchronized with a frequency which is a submultiple of the main clock frequency of the module or board where it is to be used.

The circuit is galvanically insulated, with which this signal - can have a reference different to that possessed by the controller in a common mode for switched sources of the main converter.
- Power limiter. When the feed voltage takes or acquires its maximum value, the main converter reduces its working cycle to deliver the maximum nominal power specified, with which more power can be delivered until putting into service the limit circuit of short-circuit or that of thermic protection.

In order to avoid this situation, the power limit circuit delivers an offset in continuous to the main signal sensed, so that the power delivered will be about the same within its working limit.
- Hysteresis circuits. These hysteresis circuits fix the (upper and lower) margins of input voltage within which the output regulating characteristics are met.
- Thermic protection. In view of the output power, density of components requirements and available reduced surface to dissipate the generated heat, it is necessary that this circuit protects thermically the converter.
- Configuration. The converter can be configured as a master or a slave.
- Reset circuit. This circuit supervises the V5P output. During the power-on, or when the voltage value between pins V5P and their corresponding mass connecting pin is less than a predetermined fixed value, the circuit generates a reset.

### BRIEF DESCRIPTION OF THE DRAWINGS

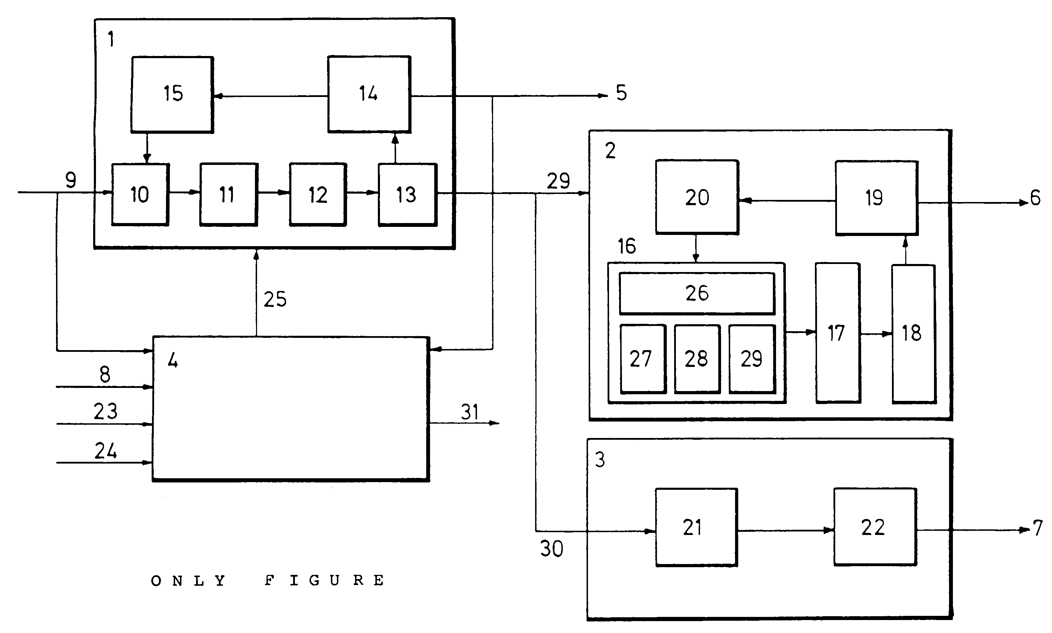

In order to complement this description and aid to a better understanding of the features of the invention, the accompanying drawing, which is a part of this specification, shows in an illustrative but non limitative sense, the following:-

The sole Figure shows a block diagram of the feed converter circuit of invention, showing the fundamental signals and componets of the circuit.

### DETAILED DESCRIPTION OF THE PREFERRED EMBODIMENT

From the sole Figure, it can be seen how the converter circuit envisaged in a preferred embodiment, provides, starting from the initial input voltage of -48V, three different feed voltages, regulated and protected from short-circuit and overcharge, -5V, +5V and +12V.

Following the sole Figure, it shows a block diagram representing the different elements constituting the feed converter circuit and its main connections.

Also, this Figure shows a main converter (1), a +12V postregulator (2) a -5V postregulator (3), and a protection, synchronism and reset circuit module (4).

The switching frequency of the +12V postregulator (2) is synchronized with the main converter (1).

As already mentioned, the main converter 41) performs a regulation process on the +5V output (5), obtaining the other two +12V (6) and -5V (7) outputs of postregulators (2) and (3) respectively.

The -48V input has been referenced with the numeral (9).

In this manner, a maximum power is obtained from the converter circuit, either via the +5V output (5) or the +12V output (6).

In addition to the above mentioned points, the converter is fitted with a pin enabling an external control signal (8) in order to configured it as a master or a slave.

In the sole figure, the main converter (1) is basically composed of a control block (10), a switch (11), a transformer (12), rectifiers and filters of not regulated auxiliary outputs (13), a feedback circuit (15) and rectifiers and output filters (14).

In a similar way, the postregulator (2) of +12V output (6) is formed by a control block (16), a switch (17), an energy storing coil (18), a feedback circuit (20), and rectifiers and output filters (19).

In the control block (16), and in view of its importance, there are also shown a controller in the strict sense (26), a resistor (27) sensing the current circulating thru the primary winding of the transformer, and being applied to short-circuit current limit circuit, a soft-start circuit (28), and lastly a generator circuit (29) of current ramp, allowing the instability appearing in the circuit to be corrected, because of the high working cycle of the "BUCK" - converter.

The postregulator (3) of the -5V output (7) consists of a linear regulator (21), the integrated circuit of which has an internal protection against short-cicuit at its output terminals, an a filter (22) is provided at its output.

The input signals of the protection, synchronism and reset circuit block (4) are: an external control (8), a synchronization clock signal (23), a disable signal of the output voltages of the converter and of resetting of the feed circuit (24), the output signals being those of clock and disable of the output voltages of the circuit (25) toward the main converter (1) and general reset (31).

It shoud be pointed out that the disable signal of the converter output voltages (24) is configured as an input signal to the converter from outside, while that referenced as (25) refers to the circuit modules, being an internal signal.

Also, not regulated signals of -12V (29) and -5V (30) entering the postregulator (2) of +12V and postregulator (3) of -5V, respectively, are shown.

It is not considered necessary to extend more this description for an expert in the art to understand the scope of the invention and the advantages derived from it.

The materials, shape, size and arrangement of the elements are open to variation, provided that it does not imply any alteration to the essence of the invention.

The terms under which this specification has been described should be always taken in an ample and non limitative sense.

## Claims

1. A feed converter circuit, of those constituted by a main converter, two postregulator modules, and a protection, synchronism and reset circuit module, in which the main converter consists of a main control block, a switch, a transformer, a feedback circuit, and a series of rectifiers and filters, one of the postregulators consisting also of an auxiliary control block, a coil, a feedback circuit and rectifiers of output signals, characterized in that more than one output of the circuit (5), (6) and (7) is regulated, the main converter (1) and one of the postregulators (2) or (3) working,in a synchronous way, at the switching frequency, and at least two of the outputs (5), (6) or (7) supplying a maximum power, without distinction.

2. A feed converter circuit, according to claim 1, characterized in that one of the postregulators (2) or (3), consisting of a switched feed source currently, based on the "BUCK" topography, incorporates a circuit generating a current ramp (29), which is directly proportional to the current circulating through the switch (17) during the conduction time.

3. A feed converter circuit, according to any preceding claims, characterized in that, in addition to protection circuits, such as a power limiter, hysteresis circuits, thermic protection, and reset, in the same module there are an external synchronism circuit (4), for working in a synchronized way at a frequency which is a submultiple of the frequency of the mail clock of the module or board wherein is used, as well as a configuration circuit as a master or a slave.
